(19) **Europäisches Patentamt / European Patent Office / Office européen des brevets**

(11) **EP 3 998 310 A1**

(12) **EUROPEAN PATENT APPLICATION**

(43) Date of publication:
**18.05.2022 Bulletin 2022/20**

(21) Application number: **21213245.0**

(22) Date of filing: **14.12.2018**

(51) International Patent Classification (IPC):
**C08L 63/00** (2006.01)    **C08J 5/24** (2006.01)
**C08G 59/40** (2006.01)    **C08G 59/50** (2006.01)
**C09J 163/00** (2006.01)    **C08K 3/36** (2006.01)
**C08K 5/21** (2006.01)    **C08K 5/25** (2006.01)
**C08K 5/315** (2006.01)    **C08K 5/3435** (2006.01)
**C08K 5/3492** (2006.01)    **C08K 5/5419** (2006.01)
**C08K 9/06** (2006.01)

(52) Cooperative Patent Classification (CPC):
**C08K 5/3435; C08G 59/00; C08G 59/4021;**
**C08G 59/5026; C08K 3/36; C08K 5/21; C08K 5/25;**
**C08K 5/3155; C08K 5/34924; C08K 5/5419;**
**C08K 9/06; C09J 163/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2017 TR 201722994**

(62) Document number(s) of the earlier application(s) in accordance with Art. 76 EPC:
**18915041.0 / 3 732 244**

(71) Applicant: **Kordsa Teknik Tekstil Anonim Sirketi 34330 Kocaeli (TR)**

(72) Inventors:
• **OZTURK, Cem**
  **34330 KOCAELI (TR)**
• **KORKMAZ, Deniz**
  **34330 KOCAELI (TR)**

(74) Representative: **Dericioglu, E. Korhan**
  **Ankara Patent Bureau**
  **Kavaklidere Mahallesi Bestekar Caddesi No: 10**
  **06680 Cankaya, Ankara (TR)**

Remarks:
This application was filed on 08-12-2021 as a divisional application to the application mentioned under INID code 62.

(54) **A HOT MELT EPOXY RESIN SYSTEM AND PROCESS FOR MAKING THE SAME**

(57)    A method of producing a hot melt epoxy resin system that is fast curable, isothermal press curable, hot demoldable capable under three minutes at 150 °C and Class A surface giving and suitable to use in the production of automotive interior composite parts characterized by comprising the steps of providing the epoxy resin composition which comprising an epoxy resin mixture comprising a first resin and a second resin; at least one thermoplastic toughener; at least one UV hindered amine light stabilizer; at least one UV absorber and/or blocker; 1,3,5-tris(4-tert.-butyl-3-hydroxy-2,6-dimethylbenzyl)-1,3,5-triazine-2,4,6-(1H,3H,5H)-trione as anti-oxidant; hydrophobic fumed silica as air release/rheology agent and hexamethyldisiloxane as an internal mold release agent, by adding all individual components of said epoxy resin composition into a first vessel and heating the mixture at 90°C and for 30 minutes while stirring; obtaining a curing agent/catalyst paste composition by adding all individual components of said curing agent/catalyst paste composition into a second vessel and mixing them with a mixer at 1000 rpm for 15 minutes; heating the obtained epoxy resin composition at 65 °C for 3 hours adding heated epoxy resin in a container than adding curing agent/catalyst paste composition in same container and mixing them at 60° C for 6 minutes at 1000 rpm to obtain hot melt epoxy resin system.

Figure – 1

**Description**

**Field of the Invention**

Present invention is related with a hot melt epoxy resin system that is fast curable, isothermal press curable, hot demoldable capable under three minutes at 150 °C and Class A surface giving and suitable to use in the production of automotive interior composite parts and a process for making the same.

**Background of the Invention**

Use of composite materials in industrial applications such as automotive aerospace and marine applications, have increased in the recent years, thanks to their higher mechanical strength values compared to metals at the same weight. Mechanical strength over the density of materials is called specific strength. The specific strength of material is important especially for parts of automotive, air plane, marine and defence industry. However, composite materials often suffer from their rough and pinhole having surface properties; therefore, they could not fulfill the expectation. Thus, to meet requirements, "Class A" surface finish is needed. In automotive design, a Class A surface is any of a set of freeform surfaces of high efficiency and quality. Class A surface is a vague term used to define surface quality of paints, coating and composites, etc. Class A surfaces do not have any surface defects such as pinholes, craters, orange peel, etc. A surface can be regarded as Class A whether it is matte or shiny butt often surfaces with gloss values higher than 90 are called Class A surfaces. Surface roughness can be a very important parameter for some Class A surfaces. Environmental (light, humidity, chemicals and heat), real life usage conditions and curing/post curing conditions resistance is expected for Class A surfaces with ΔE colour changes less than 2 at predetermined test lengths.

Epoxy term is used for both epoxide functional group and also resins that include the functional group. Epoxy resins may give homopolymerization reaction under acidic and basic catalysis conditions or polyfunctional epoxies may react with polyfunctional primary, secondary amines, special amides, di-hydrazides, diurons, poly carboxylic acids, carboxylic acid anhydrides, di or poly functional phenols and thiols to give cross-linked polymers. These co-reactants often called curing agents, faster co-reactants that give exothermic reaction and catalysing the crosslinking reaction of other groups are called as catalyst/accelerator. Epoxy resin thermoset polymers have higher mechanical properties, temperature and chemical resistance than unsaturated polyester and vinyl ester thermosets. Epoxy resins are often used in formulations of paints, coatings, fiber sizing, glass/carbon/aramid/basalt/natural fibre reinforced composites and adhesives. Epoxy resins are classified by their Tg (glass transition temperature) in Automotive industry Tg <120 °C is called as low Tg, 120 °C<Tg<180 mid Tg and Tg>180°C High Tg. Hot demoldable prepreg materials have higher Tg than 170-180 °C and thermally stable enough to withstand hot gluing, hot painting and cataphoresis conditions.

One of the preferable techniques for the production of prepreg composite materials for many automotive composite parts is isothermal fast press curing. Prepreg have one of the highest fiber to resin value which further increases the specific strength. Prepreg materials and composite parts produced with prepreg material for the automotive industry composite or other parts require having Class A surface and composite part production times near or equal to the takt time of the final product. Takt time is the average time between the start of production of one unit and the start of production of the next unit, when these production starts are set to match the rate of customer demand. Quick curing for automotive industry is another vague term like Class A yet it is limited with the Takt time in Automotive industry for consumer Cars typical takt time are between 0.5 to 2 minutes. Quick cure demand for automotive industry is curing time that is less than 5 minutes and better to be less than 3 minutes and best to equal to takt times 1-2 minutes. Current level of epoxy resin technology limits the curing time for Class A surface capable hot melt prepregs to not to be curable less than 3 minutes. As cooling and re-heating of the moulds are time consuming processes which makes the composite parts less preferred when the process speed have more importance, it is important to shorten the time consumed in these steps for a shorter takt time. As the importance of process speed increases, isothermal press curing, quick curing and being hot demoldable at cure temperatures become more important factors for composite part production for automotive industry.

Another time consuming process with composite parts for automotive industry is less than class A surfaces which requires additional time consuming surface treatments which usually undesirably results in loss of part details. Moreover, composite parts need special treatment and not capable to treated with usual automotive parts. This makes the composite parts less desirable for general automotive applications. For instance automotive parts are exposed to hot processes like hot gluing and cataphoresis. Traditional prepreg materials in the prior art, which have low Tg ≤120°C or Mid Tg 120 to 150 °C, are not capable of withstand these conditions. As a result, traditional prepreg materials are not suitable for automotive applications.

In prior art, there are some visual prepreg resin systems for hot melt epoxy prepregging, also for Chemical B staging and solvent containing prepregging. For class A surfaces, parameters of Class A surface giving prepreg resins are defined as certain prepregging/conversion rheology profile, low void content than 2%, wetting of fibre, heat, humidity, chemicals and water resistance. However these systems and methods disclosed in prior art are not completely/adequately defines the required viscosity, surface, cure exotherm, final Tg, curing speed, environmental resistance, heat resistance, UV resistance, tackiness and drapability parameters of Class A surfaces giving fast compression mouldable hot melt epoxy prepregs resins, proposed systems have their own disadvantages either in surface quality or process speed or extremely short shelf lives. Automotive parts used in automotive interior composite parts, require curing with OAA technique (preferably press) curable, curing under 3 minutes, hot-demoldable, high Tg suitable for cataphoresis and hot gluing process, class A surface giving, environmental, chemical and UV stable epoxy prepreg resins, methods disclosed either fits less than one or two of the requirements. Hot melt resin prepregging, press molding, Class A surface capabilities requires a very precise viscosity profile for both prepreg production and composite part production. Therefore, there is a need for a precisely defined resin composition and its parameters which will be used as hotmelt epoxy resin prepreg that will be used in the production of automotive interior composite parts.

### Brief Description of the Invention

A hot melt epoxy resin system comprising an epoxy resin composition and a curing agent/catalyst paste composition that is fast curable, isothermal press curable, hot demoldable capable under three minutes at 150 °C and Class A surface giving and suitable to use in the production of automotive interior composite parts is provided. Accordingly said resin system comprising the epoxy resin composition comprising an epoxy resin mixture comprising a first resin and a second resin; at least one thermoplastic toughener; at least one UV hindered amine light stabilizer; at least one UV absorber and/or blocker; 1,3,5-tris(4-tert.-butyl-3-hydroxy-2,6-dimethylbenzyl)-1,3,5-triazine-2,4,6-(1H,3H,5H)-trione as anti-oxidant; hydrophobic fumed silica as air release/rheology agent and hexamethyldisiloxane as an internal mold release agent and said curing agent/catalyst paste composition comprising a paste mixture, which is comprising dicyandiamide (DICY) below 10$\mu$m particle size and sebacic dihydrazide below 10$\mu$m particle size; an accelator selected from the group comprising diurons or imidazoles; cycloaliphatic polyamine as liquid curing agent; fumed silica as air release/rheology agent and silicone diamine as a fiber-matrix adhesion promoter.

A method of producing a hot melt epoxy resin system that is fast curable, isothermal press curable, hot demoldable capable under three minutes at 150 °C and Class A surface giving and suitable to use in the production of automotive interior composite parts comprises the steps of obtaining the epoxy resin composition by adding all individual components of said epoxy resin composition into a first vessel and heating the mixture at 90°C and for 30 minutes while stirring; obtaining a curing agent/catalyst paste composition by adding all individual components of said curing agent/catalyst paste composition into a second vessel and mixing them with a mixer preferably at 1000 rpm preferably for 15 minutes; heating the obtained epoxy resin composition at 65 °C for 3 hours; adding heated epoxy resin in a container than adding curing agent/catalyst paste composition in same container; mixing them at 60° C for 6 minutes at 1000 rpm to obtain hot melt epoxy resin system.

Therefore; precisely defined, hot melt epoxy resin system resin system and production method therof is provided. Thanks to these parameters, resins system is used as hotmelt epoxy resin prepreg that will be used in the production of automotive interior composite parts. Moreover, said epoxy resin system satisfies the quick cure demand

### Object of the Invention

One of the objects of the invention is to provide a hot melt epoxy resin system that satisfies the quick cure demand (curing time is less than 5 minutes and better to be less than 3 minutes and best to equal to takt times 1-2 minutes) of the automotive industry.

One of objects of the invention is using a hot melt prepreg which is optimized for isothermal press curing and hot demoulding and production of composite parts with that prepreg isothermal press curing and hot demoulding at cure temperature.

Another object of the invention is to provide a hot melt epoxy resin system that is capable of giving Class A composite surface quality with fast press curing.

Another object of the invention is to provide a production method of hot melt epoxy resin system with fast press curing under 3 minutes and yet still capable of giving Class A surfaces.

One other of the objects of the invention is a hot melt epoxy resin system that has High Tg (170 °C and beyond with measuring DSC and DMA Tan $\delta$) and that is sufficient to withstand cataphoresis, hot bonding and hot coating application conditions.

### Brief Description of the Drawings

**Figure 1;** shows a parameter graph for press curing.
**Figure 2;** shows a graph of DMA curing method for Example 4.
**Figure 3;** shows a graph of DMA Curing test results of Example 4.

**Detailed Description of the Invention**

Use of composite materials in industrial applications such as automotive aerospace and marine applications, have increased in the recent years, thanks to their higher mechanical strength values compared to metals at the same weight. For automotive industry quick curing is significant. Quick cure demand for automotive industry is curing time which is less than 5 minutes and better to be less than 3 minutes and best to equal to takt times 1-2 minutes. Current level of epoxy resin technology limits the curing time for Class A surface capable hot melt prepregs to not to be curable less than 3 minutes. Also class A surfaces require additional time consuming surface treatments which usually undesirably results in loss of part details. Moreover, composite parts need special treatment and not capable to treated with usual automotive parts. This makes the composite parts less desirable for general automotive applications. In prior art, there are some visual prepreg resin systems for hot melt epoxy prepregging. However, these systems and methods disclosed in prior art are not completely/adequately defines the required viscosity, surface, cure exotherm, final Tg, curing speed, environmental resistance, heat resistance, UV resistance, tackiness and drapability parameters of Class A surfaces giving fast compression mouldable hot melt epoxy prepregs resins, proposed systems have their own disadvantages either in surface quality or process speed or extremely short shelf lives. Therefore, there is a need for a precisely defined resin composition and its parameters which will be used as hotmelt epoxy resin prepreg that will be used in the production of automotive interior composite parts. Therefore, a hot melt epoxy resin system that is fast curable, isothermal press curable, hot demoldable capable under three minutes at 150 °C and Class A surface giving and suitable to use in the production of automotive interior composite parts and processes for making the same are provided by the present invention.

A hot melt epoxy resin system that is fast curable, isothermal press curable, hot demoldable capable under three minutes at 150 °C and Class A surface giving and suitable to use in the production of automotive interior composite parts comprises an epoxy resin composition and a curing agent/catalyst paste composition. Said epoxy resin composition comprises a mixture comprising a first resin and a second resin; at least one thermoplastic toughener (preferably 2,5-5% wt of total composition); at least one UV hindered amine light stabilizer (preferably 0,70-1,5% wt of total composition); at least one UV absorber and/or blocker (preferably 2,5-5% wt of total composition); 1,3,5-tris(4-tert.-butyl-3-hydroxy-2,6-dimethylbenzyl)-1,3,5-triazine-2,4,6-(1H,3H,5H)-trione as an anti-oxidant (preferably 0,1-0,5% wt of total composition); hydrophobic fumed silica as an air release agent/rheology (preferably 0,1-0,5% wt of total composition) and hexamethyldisiloxane as an internal mold release agent (preferably 0,25-1,25% wt of total composition). Said curing agent/catalyst paste composition comprises a paste mixture which is comprising dicyandiamide (DICY) below $10\mu m$ particle size and sebacic dihydrazide below $10\mu m$ particle size; d an accelator selected from the group comprising diurons or imidazoles (below $10\mu m$ particle size or in liquid form) (preferably funtionalized diuron and/or N'-(3,4-Dichlorophenyl)-N,N-dimethylurea). Said curing agent/catalyst paste composition also comprises cycloaliphatic polyamine as liquid curing agent; fumed silica as an air release/rheology agent, and silicone diamine as a fiber-matrix adhesion promoter.

In one embodiment of the invention, the first resin comprises phenolic novalac and/or bisphenol A wherein molecular weight of the first expoxy resin is less than 500 atomic mass unit (AMU). Also, the second resin comprises epoxy phenolic novalac and/or epoxy cresol novalac wherein molecular weight of the first epoxy resin is from 550 to 1700 atomic mass unit (AMU).

In one embodiment of the invention, epoxy resin composition preferably comprises 10-30% of the first resin by weight percent based on total weight of the epoxy resin composition. Also, the epoxy resin composition preferably comprises 60-82,5% of the second resin by weight percent based on total weight of the epoxy resin composition.

In one embodiment of the invention, the hot melt epoxy resin system comprises 100 Pbw of epoxy resin composition and 27 Pbw of curing agent/catalyst paste composition. Also, the hot melt epoxy resin system preferably comprises 100 Phr of epoxy resin composition and 29-36 Phr of curing agent/catalyst paste composition.

In an alternative embodiment of the invention, said curing agent/catalyst paste composition comprises 46,00% of the cycloaliphatic polyamine; 0,5% of silicone diamine; 14,00% of dicyandiamide below $10\mu m$ particle size; 23,00% of sebacic dihydrazide below $10\mu m$ particle size; 10,00% of diurons and 6,50% of Spernat D17 by weight percent based on total weight of the curing agent/catalyst paste composition.

In an embodiment of the invention, the second resin preferably have the EEW value between 215-220 g/eq more preferably better 175-188 g/eq for fast curing. Average mw of 1200 to 1700 or better to 550 to 700 atomic mass unit.

In an embodiment of the invention low molecular weight epoxy phenolic novalac, bisphenol A epoxy, the first resin preferably have the EEW value between 215-220 g/eq more preferably better 175-188 g/eq for fast curing. Average moleculer weight is less than 500 atomic mass unit.

In one embodiment of the invention, for fast curing agent/catalyst paste composition described in this invention the AHEW (Amine Hydrogen Equivalent Weight) of cycloaliphatic polyamine is preferably between 50 to 70 g/eq, more preferebly better 55 to 65 g/eq to fulfil cure exotherm limits.

In one other embodiment of the invention, said UV absorber and/or blocker is bis (1,2,2,6,6-pentamethyl-piperidyl)sebacate and/or methyl 1,2,2,6,6-pentamethyl-4-piperidyl sebacate. UV hindered amine light stabilizer preferably is 1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine, preferred. Epoxy resins tend to yellow and even chemically decompose with UV absorption. UV absorbers and blockers are needed to protect the epoxy resin system and carbon fiber.

In an embodiment of the invention, said anti-oxidant is 1,3,5-tris(4-tert.-butyl-3-hydroxy-2,6-dimethylbenzyl)-1,3,5-triazine-2,4,6-(1H,3H,5H)-trione. Anti-oxidant is used with UV absorber and/or blocker additive for further synergistic effects. Amine groups are tend to yellow by giving reaction with oxygen in air by time and also exposure to hot air during cure conditions. In order to prevent this problem anti-oxidant is used. Moreover, internal mold release agent is preferably CAS Number: 107-46-0 , hexamethyldisiloxane. Internal mold release agents are used to facilitate the mold release.

In an embodiment of the invention, said thermoplastic toughener preferably is modified PMMA block-PBA (Poly Butyl Acrylate)block-PMMA block thermoplastic acrylic tougheners (preferably high polarity modified). Thermoplastic toughening agents are preferably used in the invention as they do not affect the transparency of resin. Thermoplastic tougheneralso improves the mold release behavior, surface quality and increase the viscosity of the resin. Moreover, hydrophobic fumed silica is used as air release/rheology agent. Lowest amount of said agent is 0,5% of the weight of the total epoxy resin composition up to 2% but it is used in order not to effect interlaminar properties which is 0,1% in epoxy resin.

In an embodiment of the invention, epoxy resin composition comprises hydrophobic fumed silica as air release/rheology agent . Said agent is used for hotmelt epoxy resins since resins are expected to have very high viscosities at low temperatures yet very low viscosities at prepreg production temperatures and also molding temperatures.

In the present invention curing agent/catalyst paste composition comprises solid and liquids which are not soluble in each other viscosity is needed to increase in this mixtures so dimethyldichlorosilane Amine Hydrogen Equivalent Weight ) is used 0 to 6,5%.

In an embodiment of the invention, said epoxy resin composition preferably comprises liquid silicone diamine. It is used to promote fiber-matrix adhesion, anti-scratch and osmosis resistance. It is also used as internal mold release agent. Said epoxy resin composition comprises less than 1% (wt of total composition) liquid silicone diamine since the silicone containing additive negatively affect the paintability at higher percentages.

In an alternative embodiment of the invention Chemtrend-Zyvax Chemlease IC25 (propriety chemical) is preferably used as internal mold release additive, BASF Chimasorb 2020 (1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine, CAS: 192268-64-7) and/or BASF Tinuvin 770 DF (CAS: 41556-26-7 EC: 255-437-1 bis (1,2,2,6,6-pentamethyl-piperidyl)sebacate, CAS: 82919-37-7 EC: 280-060-4 methyl 1,2,2,6,6-pentamethyl-4-piperidyl sebacate) are preferably used both as UV hindered amine light stabilizer and UV absorber Sonox 3114 (1,3,5-tris(4-tert.-butyl-3-hydroxy-2,6-dimethylbenzyl)-1,3,5-triazine-2,4,6-(1H,3H,5H)-trione) is preferably used as Anti-Oxidant, Acrylic Arkema Nanostrength M52N (high polarity modified PMMA block-PBA(Poly Butyl Acrylate)block-PMMA block thermoplastic acrylic toughener)is preferably used as toughener, BYK A 530 air release additive, Evonik Degussa Spernat D17 (CAS No: 68611-44-9, Silane, dichlorodimethyl-, reaction products with silica) is used as rheology additive, defoamer and/or anti-caking agent and TEGOMER® A-Si 2322 (liquid silicone diamine) is preferably used as fiber-matrix adhesion promoter, anti-scratch and/or internal mold release agent.

Table 1 is showing an exemplary formulation of epoxy resin composition according to present invention.

Table 1

| Type of chemicals | Wt% min | Wt% max | EEW g/eq Min | EEW g/eq Max |
|---|---|---|---|---|
| Low Mw Epoxy Phenol Novalac and/or Bisphenol A | 10 | 30 | 145 | 195 |
| High Mw Epoxy Phenolic Novalac and or Epoxy Cresol Novalac | 82,5 | 60 | 175 | 235 |
| Thermoplastic Toughener | 2,5 | 5 | - | - |
| UV hindered amine light stabilizer | 0,70 | 1,5 | - | - |
| UV absorber | 2,5 | 5 | - | - |

(continued)

| Type of chemicals | Wt% min | Wt% max | EEW g/eq Min | EEW g/eq Max |
|---|---|---|---|---|
| anti-oxidant | 0,1 | 0,25 | - | - |
| Air release/rheology agent | 0,1 | 0,5 | - | - |
| Internal Mold release | 0,25 | 1,25 | - | - |
| Air release/rheology additive | 0 | 0,5 | - | - |

In an embodiment of the invention, curing rheology of epoxy resin composition is following. Complex coefficient of viscosity of the epoxy resin composition is preferably $\eta^* < 0,5-5$ poise at t=0 at 150°C. Preferably, complex coefficient of viscosity of the epoxy resin composition is $\eta^* > 104$ poise at t=300seconds at 150°C. Energy loss of the epoxy resin composition is tan $\delta < 0,1$ 150°C after 300 seconds.

In an alternative embodiment of the invention, epoxy resin is a mixture of the first resin and second resin wherein the ratio of the first resin to the second resin 1:3 to 1:9 in order to fulfill rheology profile requirements described press curing conditions, hot melt prepregging, Class A surface this resin composition in invention:

Table 2 shows the ideal viscosity profile for an epoxy resin composition suitable for being used to hot melt epoxy resin that is fast curable, isothermal press curable, hot demoldable.

Table 2

|  | 20 °C | 40 °C | 50 °C | 65 °C | 75 °C |
|---|---|---|---|---|---|
| Complex coefficient of viscosity $\eta^*$ (poise) | $10^6$ to $2\times10^6$ | 1000 to $2\times10^4$ | 1000 to $2\times10^4$ | 50 to 500 | 40 to 60 |
| Loss modulus G" (Pa) | $10^6$ Pa to $10^7$ Pa | - | - | - | - |
| Storage modulus G' (Pa) | $0,2\times10^6$ Pa to $4\times10^6$ Pa | - | - | - | - |
| For moderate tackiness G' (Pa) | - | - | 100 to 2000 | - | - |
| Good wind ability and tackiness | - | - | $0.9 \leqq G'/\eta^*$ (Pa /Pa s) $\leqq 2.0$ | - | - |
| Energy loss | - | - | tan $\delta \gg 5$ | - | - |

In an embodiement of the invention, DICY below $10\mu$m particle size (preferably Alzchem Dyhard 100S) and Sebacic Dihydrazide below $10\mu$m particle size are used in invention as a curing agent mixture for transparent epoxy matrix, for better UV and weathering resistance. As accelerator diurons (preferably UR 200 or UR500) or imidazoles (preferably EM-I 4, or DYHARD® Fluid AC11) with below $10\mu$m particle size or in liquid form is used. In said agents are dispersed in liquid curing agent cycloaliphatic polyamine (preferably Aradur® 40). To stabilize the curing agent suspension and to prevent caking fumed silica (preferably 7,5% of the total weight) is used (preferably Evonik Spernat D17). As fiber-matrix adhesion promoter di amino terminated silicones such as TEGOMER® A-Si 2322 are used. Di amino terminated silicones are also used to scratch resistance and internal mold release agent and promote the further stabilization of the mixture.

A method of producing a hot melt epoxy resin system that is fast curable, isothermal press curable, hot demoldable capable under three minutes at 150 °C and Class A surface giving and suitable to use in the production of automotive interior composite parts comprises the steps of

- obtaining the epoxy resin composition by adding all individual components of said epoxy resin composition into a first vessel and heating the mixture at 90°C and for 30 minutes while stirring;
- obtaining a curing agent/catalyst paste composition by adding all individual components of said curing agent/catalyst paste composition into a second vessel and mixing them with a mixer preferably at 1000 rpm preferably for 15 minutes;
- heating the obtained epoxy resin composition at 65 °C for 3 hours;
- adding heated epoxy resin in a container than adding curing agent/catalyst paste composition in same container;
- mixing them at 60° C for 6 minutes at 1000 rpm to obtain hot melt epoxy resin system.

In another embodiment of the method disclosed in the invention, components of epoxy resin composition, such as high mw epoxies, UV additives, anti-oxidant and thermoplastic tougheners which are not liquid or cyrstalline solid/salt form are melted at their melting temperature for 3 hours before hot melt epoxy resin system preparation.

In another embodiment of the method disclosed in the invention, the step of obtaining the curing agent/catalyst paste composition comprises the step of preparing the curing agent mixture by dispersing curing agent homogeneously into a liquid cycloaliphatic polyamine and difunctional amino silicone; mixing them with a mixer at 1000 rpm for 15 minutes; adding fumed silica to the mixture and mixing them with a mixer at 1000 rpm for preferably 15 minutes to obtain paste curing composition.

**Example 1:**

Epoxy resin composition of Example 1 is given in the table 4. Preparation of Epoxy Resin composition of example 1 comprises the steps of melting individual components (EPN 1138, Toughener M52N, Cimassorb 2020, Tinuvin 770DF and Antiox SONOX 3114) which are not liquid or cyrstalline solid/salt form at their melting temperature for 3 hours before epoxy resin preparation, adding all individual components including ones that melted into a dissolution vessel and heating and mixing at 90° C for 30 minutes to obtain epoxy resin formulation of Example 1.

In an alternative embodiment of the inveniton Chemtrend-Zyvax Chemlease IC25 (propriety chemical) is preferably used as internal mold release additive, BASF Chimasorb 2020 (1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine, CAS: 192268-64-7) and/or BASF Tinuvin 770 DF (CAS: 41556-26-7 EC: 255-437-1 bis (1,2,2,6,6-pentamethyl-piperidyl)sebacate, CAS: 82919-37-7 EC: 280-060-4 methyl 1,2,2,6,6-pentamethyl-4-piperidyl sebacate) are preferably used as UV additive, Sonox 3114 (CAS-Number: 40601-76- 1,3,5-tris(4-tert.-butyl-3-hydroxy-2,6-dimethylbenzyl)-1,3,5-triazine-2,4,6-(1H,3H,5H)-trione) is preferably used as Anti-Oxidant, Acrylic Arkema Nanostrength M52N (high polarity modified PMMA block-PBA(Poly Butyl Acrylate)block-PMMA block thermoplastic acrylic toughener)is preferably used as toughener, BYK A 530 air release additive, Evonik Degussa Sipernat D17 (CAS No: 68611-44-9, Silane, dichlorodimethyl-, reaction products with silica) is used as rheology additive, defoamer and/or anti-caking agent and TEGOMER® A-Si 2322 (liquid silicone diamine) is preferably used as fiber-matrix adhesion promoter, anti-scratch and/or internal mold release agent.

Table 4

| Resin composition | Chemical ID | Type of chemicals | Wt% |
|---|---|---|---|
| EPN 1183 | CAS: 28064-14-4 Epoxy Phenol Novalac | Low Mw Epoxy Phenol Novalac | 21 |
| EPN 1138 | CAS: 28064-14-4 Epoxy Phenol Novalac | High Mw Epoxy Phenolic Novalac | 62 |
| Toughener M52N | Acrylic Arkema Nanostrength M52N (high polarity modified PMMA block-PBA(Poly Butyl Acrylate)block-PMMA block thermoplastic acrylic toughener | Thermoplastic Toughener | 5 |
| Chimassorb 2020 | 1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine, CAS: 192268-64-7 | UV hindered amine light stabilizer | 1,5 |
| Tinuvin 770 DF | CAS: 41556-26-7 EC: 255-437-1 bis (1,2,2,6,6-pentamethyl-piperidyl) sebacate, CAS: 82919-37-7 EC: 280-060-4 methyl 1,2,2,6,6-pentamethyl-4-piperidyl sebacate | UV absorber | 7 |
| Antiox SONOX 3114 | CAS-Number: 40601-76- 1,3,5-tris(4-tert.-butyl-3-hydroxy-2,6-dimethylbenzyl)-1,3,5-triazine-2,4,6-(1H,3H,5H)-trione | anti-oxidant | 0,5 |
| Airrel BYK A 530 | CAS No: 68611-44-9, Silane, dichlorodimethyl-, reaction products with silica | Air release/ rheology agent | 1 |

(continued)

| Resin composition | Chemical ID | Type of chemicals | Wt% |
|---|---|---|---|
| Intrel IC25 | propriety chemical | Internal Mold release | 0,25 |
| Sipernat D17 | CAS No: 68611-44-9, Silane, dichlorodimethyl-, reaction products with silica | Air release/ rheology additive | 1,75 |
| Sum | | | 100 |

Rheometer parameters:

Parallel plate 2mm gap and 25mm plates

Shear Stress (oscillating)

Amplitude tau = 3 Pa

Frequency f = 1 Hz

T = 25-180 °C linear

Rheometer results with above set parameters:

Viscosity at 80°C is 27 poise

**Example 2:**

Curing agent/catalyst paste composition of Example 2 is given in the table 5. Preparation of Epoxy Resin composition of example 2 comprises the steps of preparing a curing agent mixture comprising 23% Sebacic Dihydrazide, 14% Dicyandiamide and 10% accelerator by dispersing curing agent homogeneously into a portion of 46% with a liquid cycloaliphatic polyamine and 0,5% difunctional amino silicone and mixing them with a mixer preferably at 1000 rpm for preferably 15 minutes; adding 0,25 to 7,5% (preferably 6,5%) fumed silica viscosity modifier 6,5% to the mixture and mixing them with a mixer preferably at 1000 rpm for preferably 15 minutes to obtain curing agent/catalyst paste composition.

**Table 5**

| Curing agent/ catalyst paste composition | Chemical ID | Type of chemicals | Wt % |
|---|---|---|---|
| Aradur® 40 | Liquid curing agent | CAS Number: 6864-37-5 , 4,4'-Methylenebis(2-methylcyclohexylamine) | 46,00% |
| TEGOMER® A-Si 2322 | fiber-matrix adhesion promoter, anti-scratch and/or internal mold release agent | Aminoalkyl functional polydimethylsiloxane | 0,5% |
| Dyhard 100S | Solid curing agent | CAS: 461-58-5, Dicyandiamide | 14,00% |
| Sebacic dihydrazide particle size <10μm | Solid curing agent | CAS: 925-83-7, Sebacic dihydrazide | 23,00% |
| UR 200 | Accelerator | CAS: 330-54-1 , Funtionalized diuron, N'-(3,4-Dichlorophenyl)-N,N-dimethylurea | 10,00% |

(continued)

| Curing agent/ catalyst paste composition | Chemical ID | Type of chemicals | Wt % |
|---|---|---|---|
| Sipernat D17 | Air release/rheology additive | (CAS No: 68611-44-9, Silane, dichlorodimethyl-, reaction products with silica) | 6,50% |
| Sum | | | 100,00% |

**Example 3:**

Example 3 is a hot melt prepregging resin system comprising epoxy resin composition of Example 1 and curing agent/catalyst paste composition of Example 2. Pvw values are given in the table 6. Said example prepared by heating the epoxy resin composition at 65 °C for 3 hours; adding heated epoxy resin in a container than adding curing agent/catalyst paste composition in the container; mixing them preferably at 60° C preferably for 6 minutes preferably at 1000 rpm.

**Table 6**

| Resin Component | Pbw |
|---|---|
| Epoxy Example 1 | 100 |
| Curing Agent/Catalyst Example 2 | 27 |

Rheometer parameters:

Parallel plate 2mm gap and 25mm plates
Shear Stress (oscillating)
Amplitude tau = 3 Pa
Frequency f = 1 Hz
T = 25-180 °C linear
Rheometer Results,
50°C 1330 poise
60°C 340 poise
70°C 110 poise
80°C 60 poise
90°C 25 poise

Isothermal Rheology

- Isothermal curing at the temperature
- Experiment lasts 60 seconds or before if the complex viscosity reaches $10^4$ Poise (gel time)

Rheology cure cycle

1. 50C to 160C with 1,33C/min speed,
2. 160C 5 minutes isothermal or before if the complex viscosity reaches $10^4$ Poise (gel time)

Isothermal rheology results of example 3resin mixture at resin bath temperatures 60 and 70 °C, resin impregnation temperatures 70 and 80 °C and various curing temperatures 120, 140, 150 °C.

| | Isothermal Temperature Rheology Studies | | | | | | |
|---|---|---|---|---|---|---|---|
| Example 3 | 60°C | | 70°C | 80°C | 120°C | 140°C | 150°C |
| Initial Viscosity | 210 Poise | | 68 Poise | 28 Poise | 6 Poise | 4 Poise | 1,2 Poise |
| Time at %20 increase in the viscosity | 18,1 minutes | | 14,6 minutes | 11,6 minutes | 3,9 minutes | 3,3 minutes | 3,1 minutes |
| Time at doubling the viscosity | >60 minutes | | >60 minutes | 31,8 minutes | 5,8 minutes | 3,5 minutes | 3,2 minutes |
| Time at 104 viscosity | >60 minutes | | >60 minutes | 42,2 minutes | 6,6 minutes | 4,2 minutes | 3,8 minutes |

Rheology curing experiment results of example % resin mixture at various times and temperatures to simulate the effect of the resin bath, impregnation and curing steps.

| Temperature Ramp Experiment Example 3 | | | | | |
|---|---|---|---|---|---|
| 1/seconds | Viscosity In Poises | | | | Time in seconds |
| 50°C $0,9 \leqq G'/\eta^* \leqq 2$ | 65°C 50 to 500 | 75°C 40-60 (t=0-30) | 85°C 10-25 | 150°C $\eta^* < 0,5$ | time 150°C t=0-$\eta^* = 10^4$ Poise |
| 1,2 | 203 | 58 | 18 | 1,2 | 228 |

For filming up to 70 °C it is suitable to apply but at 80°C the residence time is limited to 10 minutes. Also rheometer curing of example shows that the rheology profile of the resin systems is ideal for two stage hot melt prepregging and Class A surface giving press molding.

Fast curing properties of Example 3 was tested with Rheometer and Hot Plate gel times at recomended curing temperatures, usually cure time is double the gel time at that temperature. Example 3 cures at at 150°C under 3 minutes.

| | | |
|---|---|---|
| Initial Mix Viscosity | at 70°C [Pas] | 68 |
| Gel Time (Hot Plate) | at 150°C [sec] | 186 |
| Gel Time (Rheometer) | at 150°C [sec] | 228 |

Cured Matrix Properties (cured at 80 °C 30 minutes → 150 °C 60 minutes) of example 3 were tested.

| | | |
|---|---|---|
| Glass Transition Temp (Tg by DSC) [°C] | Ramped from RT to 150°C (10C/min) @150 °C 5 min Ramped 150 to 210°C (10C/min) | 163 |
| | Isothermal press @ 160 °C , mold@ RT Wait to mold reach 160 °C @ 160 °C 5 min Ramped 160 to 210°C (10C/min) | 168 |
| | Isothermal press @ 180 °C , mold @ RT Wait to mold reach 180 °C @180°C 5 min Ramped 180 to 210°C (10C/min) @210°C 30 min Postcure | 170 |
| | RT to 210°C, @210°C 5 mins, cool to 100°C | 175 |
| Tg DMA 1Hz, 3°C/min | Onset of E' | 166 |
| | Maximum of Tan$\delta$ | 181 |
| | Maximum of E" | 172 |
| Tensile Test | Tensile Strength (MPa) | 61 |
| | Tensile Modulus (MPa) | 3007 |
| | Elongation at maximum (%) | 1,6 |

(continued)

| Compression Test | Compression Strength (MPa) | 116 |
| --- | --- | --- |
| | Compression Strain at maximum (%) | 4 |
| Flexural Test | Flexural Strength (MPa) | 120 |
| | Flexural Modulus (MPa) | 3500 |
| | Elongation at maximum (%) | 4 |
| Fracture Properties Bend Notch Test | Fracture toughness K1C, [MPa√m] | 1,2 |
| | Fracture energy G1C , [J/m2] | 370 |

**Example 4:**

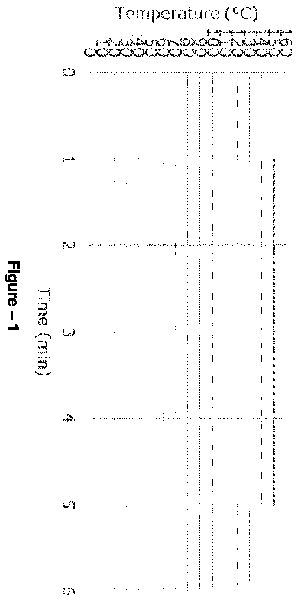

Example 3 is coated on 245 gsm Toray T300 3K Carbon Balanced Fabric as 44% resin on 56% fiber of prepreg. Press curing parameters is applied to Example 4 prepreg for coupon testing and details of the test is given below and parameter graph for press curing is shown in figure 1.

Ramp Rate: Consolidated prepregs loaded into a pre-heated tool at 150 °C Cure Cycle: 5 minutes at 150 °C $\pm$5°C, 30 bar platen pressure
Cool Down: Cured parts removed from tool without cooling (hot demolding).
Post-Cure Cycle: 6 hours at 150 °C $\pm$5°C at Oven

Pres cured composite part properties produced according to press cure cycle 150°C 7 Bar isothermal with example 4 prepreg:

| | | |
| --- | --- | --- |
| $0^0$ Tensile | Strength (MPa) | 600 |
| | Modulus (GPa) | 67 |
| | Poisson's ratio (Least squares fit) | 0,049 |
| | Poisson's ratio (Chord) | 0,049 |
| $0^0$ Flexural | Strength (MPa) | 800 |
| | Modulus (GPa) | 52 |
| Short Beam (ILSS) | Strength (MPa) | 68 |
| | Modulus (MPa) | 605 |
| In Plane Shear | Strength %5(MPa) | 80 |
| | Strength Max (MPa) | 120 |
| | Modulus (MPa) | 3200 |
| Tg (°C) (DMA) | Onset of E' | 172 |
| | Maximum of Tan$\delta$ | 185 |
| | Maximum of E" | 178 |
| DSC Tg (°C) | Inflection Point | 173 |

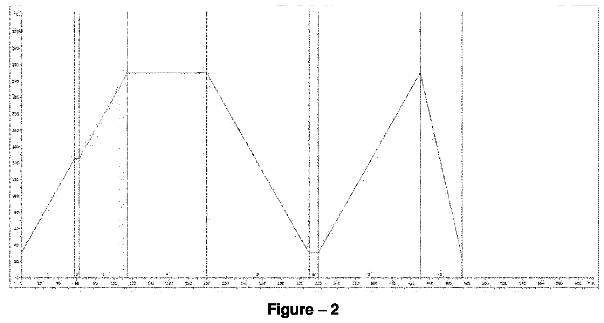

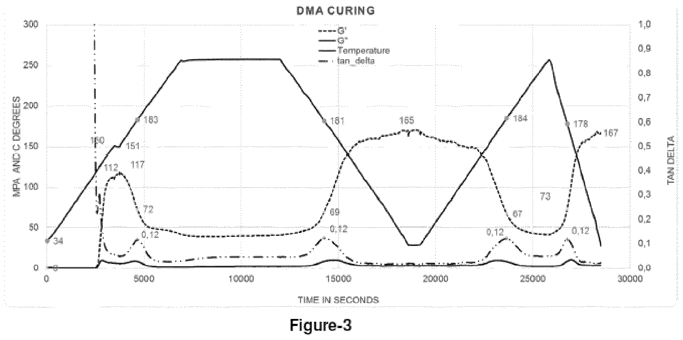

Hot demoldability of Example 4 was tested with DMA. DMA curing studies of uncured prepregs are done for the determination of correct curing parameter with press, checking the curing conditions/time, hot demoldability and also Tg development. DMA curing of prepregs are especially suitable for press curing simulations. Tg development and suitability of TDS suggested curing conditions of Example 4 prepreg is studied with DMA. Also prepreg is subjected to 250 °C for 85 minutes to simulate the effects of cataphoresis to see whether the Tg is reduced or not. During DMA testing Tg value is not effected more than 5°C so this prepreg is safe to use in cataphoresis, other hot coating and hot gluing applications. DMA curing method graph for Example 4 is given in figure 2. Also figure 3 is a graph that shows DMA Curing test results of Example 4.

DMA Curing results table of Example 4

| Ts | t | f | F | x | G' | G" | Tan delta |
|---|---|---|---|---|---|---|---|
| [-C] | [s] | [Hz] | [N] | [🡪 m] | [MPa] | [MPa] | [] |
| 182,69 | 4673,00 | 1,00 | 34,99 | 2,48 | 72,33 | 8,36 | 0,12 |
| 181,42 | 14264,00 | 1,00 | 35,01 | 2,58 | 69,10 | 8,45 | 0,12 |
| 184,45 | 23653,00 | 1,00 | 35,02 | 2,66 | 66,94 | 8,08 | 0,12 |
| 177,71 | 26769,00 | 1,00 | 35,00 | 2,46 | 72,76 | 8,59 | 0,12 |

Room temp storage modulus of single layer Example 4 around 165Mpa, After 5 minutes cure at 150C storage modulus is 116Mpa at 150C its 70% of its room temp strength and this prepreg is hot demoldable.
DMA results of example 4:

$$\text{Tan } \delta \text{ Tg} - \text{Tcure} = 35 \text{ }^\circ\text{C} > 15 \text{ }^\circ\text{C}$$

$$\text{Tan } \delta_{\text{diff}} = \text{Tan } \delta_{\text{cooling}} - \text{Tan } \delta_{\text{heating}} (182,69 - 181,42) = 1.27^\circ\text{C} < 5^\circ\text{C}$$

Storage modulus at cure temperature after 5 min. isothermal/Storage Modulus at the end of experiment (after cooling at room temp) (116/165) = 0,7 >0,65

**Example 5,**

Heat stability test is carried on Example 1 and Example 2 to monitor the stability of various conditions an automotive part is exposed during manufacture processes. Epoxy resins that are used in prepregging is usually exposed to high temperatures at curing 120 °C to 180 °C, post curing at 100°C to 200 °C , cataphoresis at 60 to 250 °C and hot gluing at 200 and 300 °C at this temperatures cured prepreg parts should not lose its 5% weight under N2 and $O_2$.
TGA weight loss table at 2%, 5%, 10%, 50% and ash content under N2 and O2 of Example 1 and Example 2,

| | Example 1 | | Example 2 | |
|---|---|---|---|---|
| | N2 | O2 | N2 | O2 |
| 2,000% Loss | 25°C | 250°C | 150°C | 150°C |
| 5,000% Loss | 270°C | 280°C | 210°C | 208°C |
| 10,00% Loss | 300°C | 300°C | 230°C | 234°C |
| 50,00% Loss | 420°C | 470°C | 300°C | 295°C |
| Ash | 14% | 0,1% | 6,7 % | 6% |

Sub components of Example 3 resin system are examined with TGA both under O2 and N2, resins systems are stable up to 210 °C (%5 weight losses). This stability ensures that Example 3 resin system is safe to be used at hot processing methods i.e. curing, post curing, hot coating and hot gluing processes whose conditions includes temperatures up to 210 °C.

**Claims**

1. A method of producing a hot melt epoxy resin system that is fast curable, isothermal press curable, hot demoldable capable under three minutes at 150 °C and Class A surface giving and suitable to use in the production of automotive interior composite parts **characterized by** comprising the steps of

- providing the epoxy resin composition which comprising an epoxy resin mixture comprising a first resin and a second resin; at least one thermoplastic toughener; at least one UV hindered amine light stabilizer; at least one UV absorber and/or blocker; 1,3,5-tris(4-tert.-butyl-3-hydroxy-2,6-dimethylbenzyl)-1,3,5-triazine-2,4,6-(1H,3H,5H)-trione as anti-oxidant; hydrophobic fumed silica as air release/rheology agent and hexamethyldisiloxane as an internal mold release agent,
- by adding all individual components of said epoxy resin composition into a first vessel and heating the mixture at 90°C and for 30 minutes while stirring;
- obtaining a curing agent/catalyst paste composition by adding all individual components of said curing agent/catalyst paste composition into a second vessel and mixing them with a mixer at 1000 rpm for 15 minutes;
- heating the obtained epoxy resin composition at 65 °C for 3 hours
- adding heated epoxy resin in a container than adding curing agent/catalyst paste composition in same container;
- mixing them at 60° C for 6 minutes at 1000 rpm to obtain hot melt epoxy resin system.

2. A method according to claim 1 **characterized in that** the step of obtaining the curing agent/catalyst paste composition comprises the steps of

- preparing the curing agent mixture by dispersing curing agent homogeneously into a liquid cycloaliphatic polyamine and difunctional amino silicone;
- mixing them with a mixer at 1000 rpm for 15 minutes;
- adding fumed silica to the mixture and mixing them with a mixer at 1000 rpm for 15 minutes to obtain paste curing composition.

**Figure – 1**

**Figure – 2**

Figure-3

Europäisches
Patentamt

European
Patent Office

Office européen
des brevets

# EUROPEAN SEARCH REPORT

Application Number

EP 21 21 3245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/087935 A1 (TORAY INDUSTRIES [JP]) 9 June 2016 (2016-06-09) * claims 1-23 * * Examples * ----- | 1,2 | INV. C08L63/00 C08J5/24 C08G59/40 C08G59/50 |
| A | WO 2017/037294 A1 (GURIT LTD [GB]) 9 March 2017 (2017-03-09) * pages 4,5 * * examples 1-4 * * claims 1-66 * ----- | 1,2 | C09J163/00 C08K3/36 C08K5/21 C08K5/25 C08K5/315 C08K5/3435 |
| A | CN 105 349 080 A (YANTAI DARBOND TECHNOLOGY CO) 24 February 2016 (2016-02-24) * claims 1-10 * * examples 1-5 * ----- | 1,2 | C08K5/3492 C08K5/5419 C08K9/06 |

**TECHNICAL FIELDS SEARCHED (IPC)**

C09J
C08G

The present search report has been drawn up for all claims

| Place of search | Date of completion of the search | Examiner |
|---|---|---|
| The Hague | 4 April 2022 | Pouilley, Delphine |

EPO FORM 1503 03.82 (P04C01)

## ANNEX TO THE EUROPEAN SEARCH REPORT
## ON EUROPEAN PATENT APPLICATION NO.

EP 21 21 3245

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2022

| Patent document cited in search report | | Publication date | Patent family member(s) | | Publication date |
|---|---|---|---|---|---|
| WO 2016087935 | A1 | 09-06-2016 | CN | 107001594 A | 01-08-2017 |
| | | | EP | 3230339 A1 | 18-10-2017 |
| | | | JP | 6658747 B2 | 04-03-2020 |
| | | | JP | 2017536441 A | 07-12-2017 |
| | | | KR | 20170091639 A | 09-08-2017 |
| | | | US | 2017362376 A1 | 21-12-2017 |
| | | | WO | 2016087935 A1 | 09-06-2016 |
| WO 2017037294 | A1 | 09-03-2017 | CN | 108137838 A | 08-06-2018 |
| | | | EP | 3344688 A1 | 11-07-2018 |
| | | | GB | 2542028 A | 08-03-2017 |
| | | | US | 2018237603 A1 | 23-08-2018 |
| | | | US | 2021139659 A1 | 13-05-2021 |
| | | | WO | 2017037294 A1 | 09-03-2017 |
| CN 105349080 | A | 24-02-2016 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS,* 107-46-0
- *CHEMICAL ABSTRACTS,* 192268-64-7
- *CHEMICAL ABSTRACTS,* 41556-26-7
- *CHEMICAL ABSTRACTS,* 82919-37-7
- *CHEMICAL ABSTRACTS,* 68611-44-9
- *CHEMICAL ABSTRACTS,* 40601-76
- *CHEMICAL ABSTRACTS,* 28064-14-4
- *CHEMICAL ABSTRACTS,* 6864-37-5
- *CHEMICAL ABSTRACTS,* 461-58-5
- *CHEMICAL ABSTRACTS,* 925-83-7
- *CHEMICAL ABSTRACTS,* 330-54-1